(19)

Europäisches Patentamt
European Patent Office
Office européen des brevets

(11)     **EP 2 843 674 A1**

(12)     **EUROPEAN PATENT APPLICATION**

(43) Date of publication:
04.03.2015  Bulletin 2015/10

(51) Int Cl.:
*H01G 9/20* (2006.01)     *H01L 51/42* (2006.01)

(21) Application number: 14002948.9

(22) Date of filing: 25.08.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 28.08.2013  US 201314012159

(71) Applicant: Sharp Kabushiki Kaisha
Osaka 545 (JP)

(72) Inventors:
• Lee, Jong-Jan
  Camas, Washington 98607 (US)

• Nishimura, Karen Yuri
  Camas, Washington 98607 (US)
• Pan, Wei
  Camas, Washington 98607 (US)
• Vail, Sean Andrew
  Vancouver, Washington 98684 (US)

(74) Representative: Müller - Hoffmann & Partner Patentanwälte
St.-Martin-Strasse 58
81541 München (DE)

(54)     **Dye-sensitized solar cell, tandem dye-sensitized solar cell, and composite nanostructure**

(57)     A dye-sensitized solar cell (DSC) (400) is provided, made from an anode layer (406) of tin oxide ($SnO_2$) coated titanium oxide ($TiO_2$) nanostructures (300) that overlie a substrate (402) top surface (404). A dye (407) overlies the anode layer (406), and a cathode (408) overlies the dye (407). The cathode (408) may be a hole conducting layer having a solid state phase or a redox electrolyte, with a counter electrode (412). The $TiO_2$ nanostructures (300) may be $TiO_2$ nanoparticles, $TiO_2$ nanowires, or $TiO_2$ nanotubes. In the case of $TiO_2$ nanowires or $TiO_2$ nanotubes, their center axes (500) are perpendicular to the substrate (402) top surface (404). Regardless of the $TiO_2$ nanostructure (300) morphology, the $SnO_2$ coating (304) thickness (306) is in the range of 2 to 10 nanometers (nm). In one aspect, the $SnO_2$ coated $TiO_2$ nanostructures (300) have a dielectric layer shell (308), which may have a thickness (310) in the range of 0.3 to 2 nm.

## FIG. 3A

EP 2 843 674 A1

FIG. 3B

300

304

TiO2
NANOSTRUCTURE
302

## Description

## TECHNICAL FIELD

This invention generally relates to photovoltaic energy cells and, more particularly, to a dye-sensitized solar cell (DSSC or DSC) formed from a tin oxide coated titanium oxide nanostructure electrode.

## BACKGROUND ART

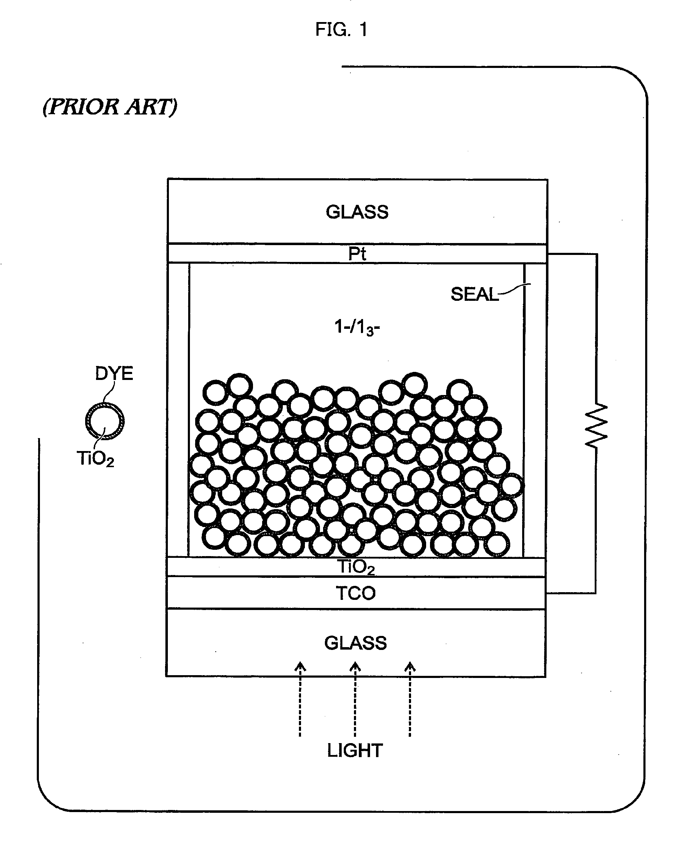

Fig. 1 is a partial cross-sectional view of typical DSC structure (prior art). DSCs had typically exhibited low conversion efficiencies until a breakthrough in 1991 by professor Grätzel and co-workers using a nanocrystalline titanium oxide ($TiO_2$) electrode modified with a photon absorbing dye. In modern DSC cells, the photoanode $TiO_2$ electrode is fabricated on a transparent conducting oxide (TCO), a monolayer of absorbed dye on a $TiO_2$ surface, a platinum (Pt) counter-electrode, and an electrolyte solution with a dissolved iodine ion/tri-iodide ion redox couple between the electrodes. The structure shown in Fig. 1 has successfully demonstrated an energy conversion efficiency that exceeded 7% in 1991 (B. O'Regan and M. Gratzel, "A low cost high efficiency solar cell based on dye-sensitized colloidal Ti02 films," Nature, 353, 737-740, Oct. 24, 1991), 10% in 1993 (M.K. Nazeeruddin et al., J. Am. Chem. Soc., 115, 6382-6390, 1993), and 11.1% (L. Han et al., "High efficiency of dye-sensitized solar cell and module," IEEE 4th World Conference on Photovoltaic Energy Conversion, 179-182, 1996).

In order to sensitize the $TiO_2$, a dye molecule is attached to the $TiO_2$ surface. When the dye molecule absorbs a photon, an electron is excited to the lowest unoccupied molecular orbital (LUMO) and is subsequently injected into the conduction band of the $TiO_2$. As a result of this, the dye molecule is transformed to its oxidized state. The injected electron percolates through the porous nanocrystalline structure to the TCO (negative electrode, anode) and finally through an external load to the counter electrode (positive electrode, cathode, and Pt). At the counter electrode, the electron is transferred to tri-iodide in the electrolyte to yield iodine ($I_3^- + 2_e^- \rightarrow 3I^-$). The cycle is closed by reduction of the oxidized dye by the iodine in the electrolyte.

In another aspect of solar cell technology, the most frequently explored strategy for achieving higher efficiency in solar cells has focused on the use of a tandem cell structure, through which individual cells can be tuned to a particular frequency of the spectrum. This allows the cells to be stacked such that layers capable of capturing shorter wavelengths are located on top, while longer wavelengths of light are allowed to pass through the top and travel to the lower layers. For DSC cells, several tandem cell concepts and structures have been proposed. One proposal suggests a random mixture of two or more dyes with different absorption spectra (molecular cocktail). So far, this approach has not led to higher efficiency cells when compared to the best (single) dye with broad absorption characteristics.

As noted above, a DSC is typically composed of a mesoporous $TiO_2$ electrode sensitized with a photon absorbing dye, which is in turn contacted by a redox-active hole transporting medium. Photoexcitation of the sensitizer leads to electron transfer from the excited dye to $TiO_2$ conduction band, and the oxidized dye is regenerated via hole-transfer to the redox active medium. The photoelectron generation, charge transfer, and dye regeneration are well studied. The charge transfer from the excited dye to $TiO_2$ conduction band depends upon the anchoring function group of the dye and the energy difference between the excited dye and the $TiO_2$ conduction band. In principle, a more efficient electron transfer occurs for the system with a larger energy difference.

In addition, for a dye to absorb longer wavelengths, the energy difference between the ground state (highest occupied molecular orbital, HOMO) and the excited state (lowest unoccupied molecular orbital, LUMO) must be reduced. For instance, for a dye to be able to absorb wavelengths shorter than 700 nanometers (nm), its bandgap (energy difference between HOMO and LUMO) is around 1.8 electron volts (eV). For a dye to absorb wavelengths shorter than 1050 nm, its bandgap is around 1.2 eV. When the bandgap of the dye shrinks, the LUMO level drops, and the energy difference (between the excited dye (LUMO level) and the $TiO_2$ conduction band) decreases, leading to a decreased likelihood of charge injection.

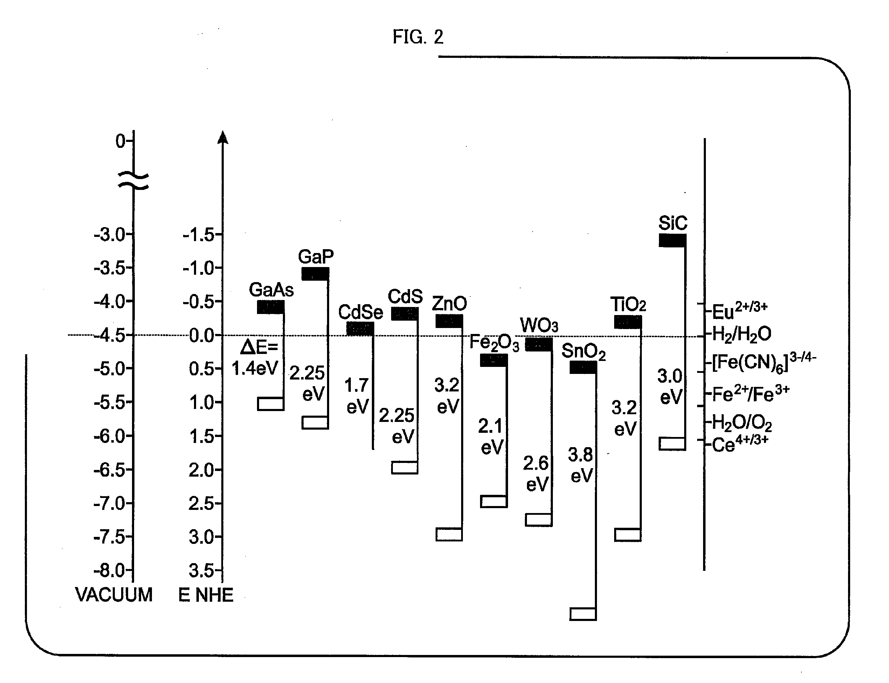

Fig. 2 illustrates the band structure of various metal oxides and semiconductors (prior art). Shown are the band positions of several semiconductors in contact with an aqueous electrolyte at a pH 1. The lower edge of the conduction band (top) and the upper edge of the valence band (bottom) are presented along with the bandgap in electron volts. On the right side the standard potentials of several redox couples are presented against the standard hydrogen electrode (NHE or SHE) potential.

Comparing to the $TiO_2$ conduction band ($E_C$), ZnO has a 0.1 - 0.2 eV lower Ec. The favorable Ec level and ease of fabricating ZnO nanostructures, makes ZnO a common replacement for $TiO_2$ as a photoanode in DSC development. However, ZnO is very active and unstable, and the energy difference from $TiO_2$ is too small for many applications. Other oxides, e.g., $WO_3$ and $Fe_2O_3$ are potential candidates, but not much related development has been done on these materials. On the other hand, $SnO_2$ has an $E_C$ of about 0.6 eV below that of $TiO_2$. Several published papers suggest that $SnO_2$ may be a suitable photoanode for DSC application. In addition, bulk $SnO_2$ has a mobility of up to 240 centimeters squared per volt-seconds ($cm^2$/V-s), which is 100 times that of $TiO_2$. Of course, for a DSC incorporating bare $SnO_2$ with no surface treatment, the regeneration of the oxidized photosensitizer from the hole conductor (or the redox couple) is often not sufficiently fast, and the recombination of the conduction band electrons with the oxidized photosensitizer is incomplete. However, some reports suggest that with the incorporation of thin (sub nm) interfacial layers of wide bandgap "insulating" oxides, such as MgO or $Al_2O_3$, between the $SnO_2$ and photosensitizer, suppress the back reaction and can enable a significant enhancement in the photovoltaic conversion efficiency.

Mesoporous $SnO_2$ electrodes made of $SnO_2$ nanoparticles have been described and good DSC performance was reported. Nevertheless, DSC electrodes made of one-dimensional $SnO_2$ nanostructures, such as nanowire, nanoribbon, and nanotube have advantages, such as a faster charge transfer. Four examples of one-dimensional $SnO_2$ nanostructures are provided below. As used herein, a "one-dimensional structure" is essentially a structure in the shape of a line, such as a wire, tube, or rod having a high aspect ratio between the length and diameter. In some aspects, the ratio is greater than 10:1.

*($SnO_2$ Nanowire)*

$SnO_2$ nanowires can be synthesized with sizes ranging from 20 - 200 nm in diameter and lengths up to a few tens of micrometers depending on the growth conditions. In one method, the growth of nanowires follows that of a self catalytic vapor-liquid-solid (VLS) mechanism. Quartz substrates with tin metal powders are placed in the center zone of a tubular quartz reactor. The reactor is then heated to temperatures of 850 - 950°C at ambient pressure and under a continuous flow of argon. At these elevated temperatures, the metal powders melt and form a thin film on the substrates. The branching and interconnectivity of nanowires is promoted by providing Sn droplets intermittently for secondary nucleation. This is done by fluctuating the temperatures of both the Sn source and the substrate. The precursor for nanowire growth is pure Sn metal.

*($SnO_2$ Nanotubes)*

$SnO_2$ nanotubes can be synthesized by template-directed electrodeposition using nuclear track etching of polycarbonate membranes with a nominal pore diameter of 50 or 100 nm. The rated thickness and pore density are 6 $\mu$m and $6 \times 10^8$ pores cm$^{-2}$, respectively. One side of the polycarbonate membrane is first coated with a 500 nm thick layer of gold by sputtering to create a seed layer. The electrical contact is made to the membrane working electrode using a conductive copper tape. The resultant template is placed in an electrolyte cell, such that an area of 1 cm$^2$ is exposed to the electrolyte. Platinum gauze is used as the counter electrode and a Ag/AgCl (3 M KCl) electrode serves as the reference electrode. Electrochemical synthesis is performed under a potentiostatic mode using a multichannel potentio/galvanostat. The electrolyte consists of 20 mM tin chloride, 0.1 M sodium nitrate, and 75 mM nitric acid in distilled

(DI) water. $SnO_2$ is deposited on the templates using a fixed potential of -0.4 V (versus Ag/AgCl) with varying deposition times. Following deposition, the gold seed layer used as the working electrode is mechanically removed and the membrane rinsed in DI water. The nanotubes are released by dissolving the polycarbonate membrane in dichloromethane. The suspension is centrifuged, the nanotubes washed three times with dichloromethane, and finally suspended in isopropanol. The resultant $SnO_2$ nanotubes are annealed in air at 400 °C for 4 hours to investigate the effect of annealing on the crystal structure of the nanotubes.

*(Single Crystalline $SnO_2$ Nanoribbons)*

The experimental apparatus used for the synthesis of $SnO_2$ nanoribbons consists of a horizontal alumina tube furnace, a rotary pump, and a gas supply. SnO or $SnO_2$ powder is used as the source material, placed in an alumina crucible, with the crucible being located at the center of the alumina tube. Several alumina substrates are placed downstream inside the alumina tube for collecting the growth products. After evacuating the alumina tube to $2 \times 10^{-3}$ Torr, thermal evaporation is conducted at 1000 °C for SnO powders, or 1350 °C for the $SnO_2$ powders, for 2 hours under a pressure of 300 Torr and Ar gas flow rate of 50 standard cubic centimeters per minute (sccm). A white-color, fuzzy looking product is collected in a region where the temperature is in the range of 900-950 °C. Electron diffraction analysis reveals that each nanoribbon is single crystalline $SnO_2$ without dislocation.

*(Single Crystalline $SnO_2$ Nanowires)*

In one method, a horizontal quartz tube is mounted inside a high-temperature tube furnace. A mixture of active carbon powder 1.2 grams (g) and fine $SnO_2$ powder 5 g are placed on a quartz crucible and Si substrates (deposited with thin 5 nm Au) are placed downstream of the furnace. After the wafer is inserted into the center of the quartz tube, the quartz tube is first evacuated by a vacuum pump. Next, the furnace is rapidly heated up to 700 °C from room temperature under a $N_2$ flow at a rate of about 100 sccm. The pressure is kept at 200 Torr and the heating lasts for 240 minutes. Subsequently, the furnace is cooled to room temperature naturally, and the products are collected on the substrates from different regions of the furnace. All these regions have the same temperature of 700 °C. It is observed that thick, white, cotton-wool-like products are deposited on the surfaces of the substrates. Scanning electron microscope (SEM) images of the resulting product indicate single crystalline $SnO_2$ nanowires.

Some of the previously discussed one-dimensional $SnO_2$ nanostructures exhibit a single crystalline structure. DSC cells have been successfully fabricated with these one-dimensional nanostructures. As discussed above, thin (sub nm) interfacial layers of wide bandgap "insulating" oxides are needed to suppress the back reaction. However, there are challenges with using these one-dimensional $SnO_2$ nanostructures; for example (1) they are random powder-like structures and (2) synthesis temperatures are very high.

It would be advantageous to produce $SnO_2$ as an ordered, one dimensional nanostructures using a low temperature process.

## SUMMARY OF INVENTION

According to one aspect of the invention, a dye-sensitized solar cell (DSC) comprises: a substrate having a top surface; an anode layer comprising tin oxide ($SnO_2$) coated titanium oxide ($TiO_2$) nanostructures overlying the substrate top surface; a dye overlying the anode layer; and, a cathode overlying the dye.

According to one aspect of the invention, a tandem dye-sensitized solar cell (DSC) comprises: a first photovoltaic (PV) cell including: a first anode layer of tin oxide ($SnO_2$) coated titanium oxide ($TiO_2$) nanostructures; a first dye overlying the first anode layer; a first cathode overlying the first dye; a second PV cell including: a second anode layer of $TiO_2$ nanostructures; a second dye overlying the second anode; a second cathode overlying the second dye; an electrical connection between the first PV cell and the second PV cell; and, wherein an electrode of the second PV cell, selected from a group consisting of the second anode and second cathode, is configured to initially accept incident light.

According to one aspect of the invention, a composite nanostructure comprises: a titanium oxide ($TiO_2$) nanostructure core; and, a tin oxide ($SnO_2$) coating covering the core.

## BRIEF DESCRIPTION OF DRAWINGS

Fig. 1 is a partial cross-sectional view of typical DSC structure (prior art).
Fig. 2 illustrates the band structure of various metal oxides and semiconductors (prior art).
Figs. 3A through 3D are partial cross-sectional views of a composite nanostructure.
Fig. 4 is a partial cross-sectional view depicting a dye-sensitized solar cell (DSC).
Fig. 5 is a partial cross-sectional view depicting the DSC of Fig. 4 in greater detail.
Figs. 6A through 6C are partial cross-sectional views of a tandem DSC.
Figs. 7A and 7B respectively depict plan and partial cross-sectional views of a first step in the fabrication of $SnO_2$ coated $TiO_2$ nanostructures before measurement.
Figs. 8A and 8B respectively depict plan and partial cross-sectional views of a second step in the fabri-

cation of $SnO_2$ coated $TiO_2$ nanostructures.
Figs. 9A through 9F are graphs of work functions measured on three separate $TiO_2$/FTO samples before (Figs. 9A-9C) and after (Figs. 9D-9F) $SnO_2$ coating treatment.
Fig. 10 is a diagram depicting the band structure relationship between $TiO_2$, $SnO_2$, a first dye, and a second dye.

## DESCRIPTION OF EMBODIMENTS

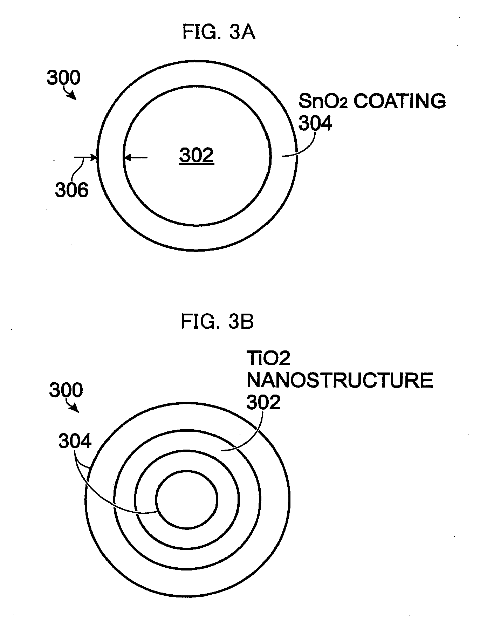

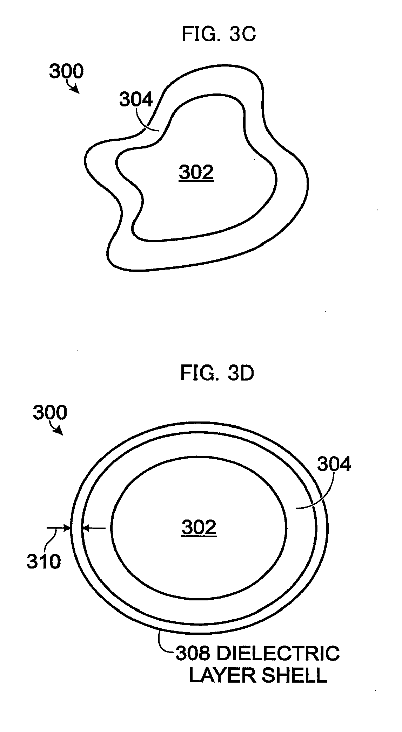

Figs. 3A through 3D are partial cross-sectional views of a composite nanostructure. The composite nanostructure 300 comprises a titanium oxide ($TiO_2$) nanostructure core 302 and a tin oxide ($SnO_2$) coating 304 covering the core 302. The $SnO_2$ coating 304 has a thickness 306 in the range of 2 to 10 nanometers (nm). In Fig. 3A, the $TiO_2$ nanostructure core 302 is a nanowire morphology, in Fig. 3B, the morphology is a nanotube, and in Fig. 3C the morphology is a nanoparticle.

The composite nanostructure of Fig. 3D additionally comprises a dielectric layer shell 308 overlying the $SnO_2$ coating 304. Here the $TiO_2$ nanostructure core 302 is shown as a nanowire, but it could just as well be a nanotube or nanoparticle. The dielectric layer shell 308 has a thickness 310 in the range of 0.3 to 2 nm. Some examples of the dielectric layer shell 308 material include niobium oxide ($NbO_3$), aluminum oxide ($Al_2O_3$), magnesium oxide (MgO), silicon dioxide ($SiO_2$), and $TiO_2$. Other materials, especially metal oxide materials may possibly be used.

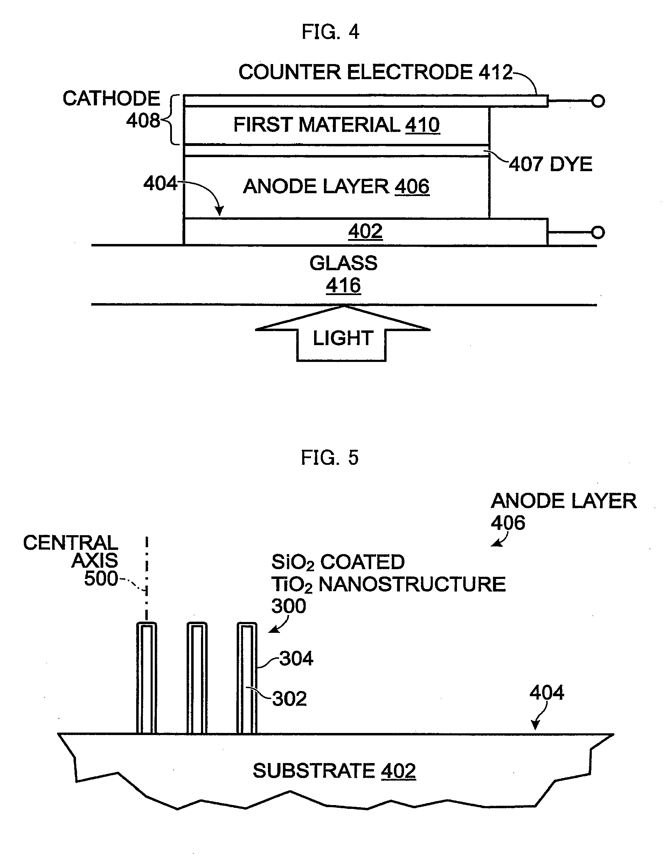

Fig. 4 is a partial cross-sectional view depicting a dye-sensitized solar cell (DSC). The DSC 400 comprises a substrate 402 having a top surface 404. An anode layer 406 comprising $SnO_2$ coated $TiO_2$ nanostructures, identified in Figs. 3A-3D as composite structures 300, overlie the substrate top surface. The substrate 402 may be made from a transparent conductive oxide (TCO) material, such as $In_2O_3$-$SnO_2$ (indium tin oxide or ITO), tin oxide ($SnO_2$), zinc oxide (ZnO), aluminum/gallium doped zinc oxide (ZnO:Al(Ga)), a carbon nanotube layer, a graphene layer, or fluorine doped tin oxide ($SnO_2$:F or FTO). A dye 407 overlies the anode layer 406, and a cathode 408 overlies the dye. The cathode 408 is comprised of a first material 410, which may be a hole conducting layer having a solid state phase or a redox electrolyte having a liquid phase, overlying the dye 407. Although the dye 407 is depicted as a separate layer, it should be understood that the dye may permeate into the $SnO_2$ coated $TiO_2$ nanostructures of the anode layer 406. Similarly, it should be understood that the first material 410 may permeate into the $SnO_2$ coated $TiO_2$ nanostructures of the anode layer 406 and be in contact with the dye 407.

A counter electrode 412 overlies the first material 410. For example, the first material may be a redox electrolyte that includes iodine and/or tri-iodine. As used herein, the orientation of the DSC 400 is relative. Therefore, the term "underlie" may alternatively be understood to mean "overlie" or in direct physical contact, depending upon the orientation of the DSC 400.

In one aspect, the substrate 402 is formed overlying glass 416 and acts as an external electrode. In another aspect, the counter electrode 412 acts as an external electrode and can be made from a metal such as platinum (Pt), platinum/aluminum (Pt/Al), silver (Ag), gold (Au), or carbon. The external electrodes are configured to be connected to other DSCs or electrical circuitry (not shown) such as a DC-to-AC inverter.

As explained above in the descriptions of Figs. 3A-3D, the $TiO_2$ nanostructures, referred to as $TiO_2$ nanostructure cores 302 in Figs. 3A-3D, may be $TiO_2$ nanoparticles (Fig. 3C), $TiO_2$ nanowires (Fig. 3A), or $TiO_2$ nanotubes (Fig. 3B). Referring still to Figs. 3A-3D, the $SnO_2$ coating thickness 306 on the $TiO_2$ nanostructures 302 is in the range of 2 to 10 nm. In some aspects, the $TiO_2$ nanostructure acts as a "backbone" to make an ordered one-dimensional nanostructure. The $SnO_2$ coating on the surface of $TiO_2$ improves the charge transfer from the excited dye to $SnO_2$ conduction band.

Further, as shown in Fig. 3D, the $SnO_2$ coated $TiO_2$ nanostructures 300 may further comprise a dielectric layer shell 308 overlying the $SnO_2$ coating 304. The dielectric layer shell 308 has a thickness 310 in the range of 0.3 to 2 nm. Some examples of the dielectric layer shell 308 material include niobium oxide ($NbO_3$), aluminum oxide ($Al_2O_3$), magnesium oxide ($MgO$), silicon dioxide ($SiO_2$), and $TiO_2$. Other materials, especially metal oxide materials may possibly be used. Since the $SnO_2$ surface may exhibit high charge recombination, the thin layer of dielectric layer may be used to inhibit charge recombination. Note that the dielectric layer 308 is much thinner than the $SnO_2$ coating 304, and it does not affect the charge transfer from the excited dye 407 to $SnO_2$ conduction band.

Fig. 5 is a partial cross-sectional view depicting the DSC of Fig. 4 in greater detail. In the case where the $TiO_2$ nanostructures 302 are $TiO_2$ nanowires or $TiO_2$ nanotubes, they have a center axis 500 perpendicular to the substrate top surface 404. That is, the $SnO_2$ coated $TiO_2$ nanostructures 300 are ordered in a direction perpendicular to the substrate top surface 404.

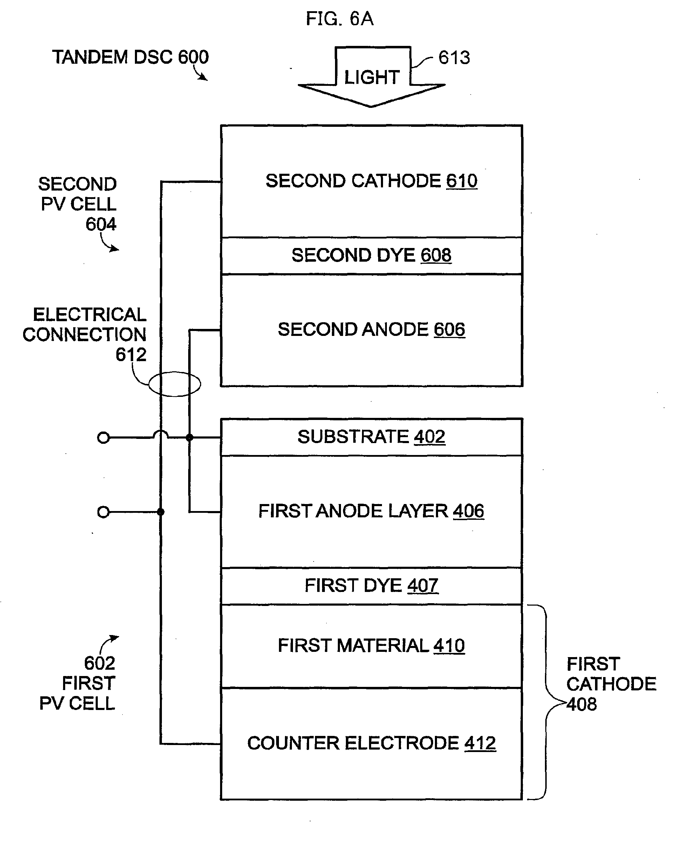

Figs. 6A through 6C are partial cross-sectional views of a tandem DSC. The tandem DSC 600 comprises a first photovoltaic (PV) cell 602 and a second PV cell 604. The first PV cell 602 includes a first anode layer 406 of $SnO_2$ coated $TiO_2$ nanostructures. The $SnO_2$ coated $TiO_2$ nanostructures are labeled with reference designator 300 in Fig. 4. Details of the $SnO_2$ coated $TiO_2$ nanostructures have been presented above in the descriptions of Figs. 3A-3D and 4, and are not repeated here in the interest of brevity. As noted above in the description of Fig. 4, the first anode layer 406 is typically formed overlying a substrate (see Fig. 4, reference designator 402). A first dye 407 overlies the first anode layer 406, and a first cathode 408 overlying the first dye 407. As noted above in the description of Fig. 4, the first cathode 408 comprises a first material 410, which may be a solid state phase hole conducting layer and or liquid phase redox electrolyte, overlying the first dye 407, and a counter electrode 412 overlying the first material.

The second PV cell 604 includes a second anode layer 606 of $TiO_2$ nanostructures. Note: the $TiO_2$ nanostructures that make up the second anode layer 606 are not coated with tin oxide. A second dye 608 overlies the second anode 606, and a second cathode 610 overlies the second dye 608. The second cathode 610 may be formed from one of the above-described first materials and a counter electrode. An electrical connection 612 exists between the first PV cell 602 and the second PV cell 604. The electrical connection 612 may be a parallel connection, as shown in Fig. 6A, or a series connection, as described below. Either the second anode 606 of the second PV cell 604, or the second cathode 610 (as shown in Fig. 6A), is configured to initially accept incident light 613. Typically, the first dye 407 has a first bandgap and the second dye 608 has a second bandgap, larger than, or equal to the first bandgap.

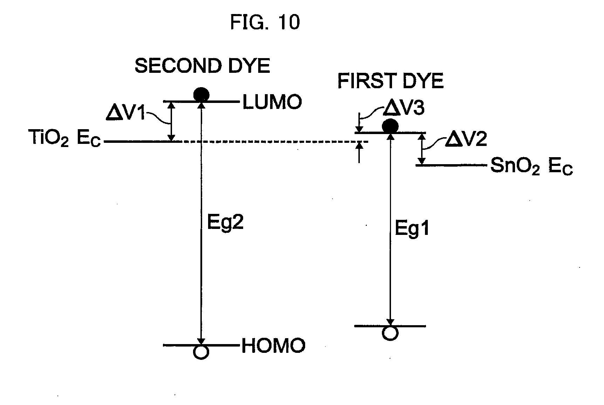

Fig. 10 is a diagram depicting the band structure relationship between $TiO_2$, $SnO_2$, a first dye, and a second dye. Only the Ec is shown for $TiO_2$ and $SnO_2$ (refer to Fig. 2). Note, the terms Ec and Ev are used for crystalline structures, while LUMO and HOMO are used for molecules. Conventional dye-sensitized solar cells have a dye bandgap (LUMO to HOMO) of around 1.7 eV, and can absorb wavelengths shorten than 750 nm well, using a $TiO_2$ nanostructured anode. In order to improve absorption for longer wavelengths, the bandgap of the dye (LUMO to HOMO) must be smaller than 1.7 eV. As the bandgap gets smaller, the distance (energy drop) from the LUMO of the smaller bandgap dye to $TiO_2$ Ec becomes smaller ($\Delta V3$ in the figure). Further, the charge injection from the dye to Ec is easier if the energy drop is larger. For this reason, $SnO_2$ is used in conjunction with the smaller bandgap dye. From the figure, you can see $\Delta V2$ is larger than $\Delta V3$, so the change injection to $SnO_2$ is easier than injection to $TiO_2$.

In a tandem PV cell, the light preferably initially intersects the larger bandgap material of the second PV cell (604, Figs. 6A-6C). Photons having less energy (longer wavelength) than the bandgap (Eg) of the second PV cell pass through, and can be absorbed by the first PV cell (602, Fig. 6A-6C) with the smaller Eg material.

In one aspect, the series connection is made using a transparent conductive adhesive. For example, organic adhesives may be used such as: poly(3,4-ethylenedioxythiophene):poly(styrene sulfonate) (PEDOT:PSS) or similar polymers based upon the PEDOT scaffolding such as Aedotron™ and Oligotron™ (TDA Research, Inc.), polythiophene derivatives, polyaniline, polypyrrole, polyacetylene, polyphenylenevinylene, polyphenylene sulfides, etc., which may contain other additives to increase conductivity and/or adhesion properties. Further, otherwise nonconductive or low conductivity adhesive polymers may be used that are appropriately doped with metals, metal nanoparticles, carbon nanotubes, etc., in order to increase conductivity.

Although not explicitly shown, the second PV cell 604 may be formed on glass substrate with intervening external electrodes made from a transparent conductive oxide (TCO) layer and a metal, as is conventional. The TCO layer can be selected from the following materials: $SnO_2$:F (FTO), $In_2O_3$-$SnO_2$ (ITO), ZnO, ZnO:Al(Ga), carbon nanotube layer and graphene layer.

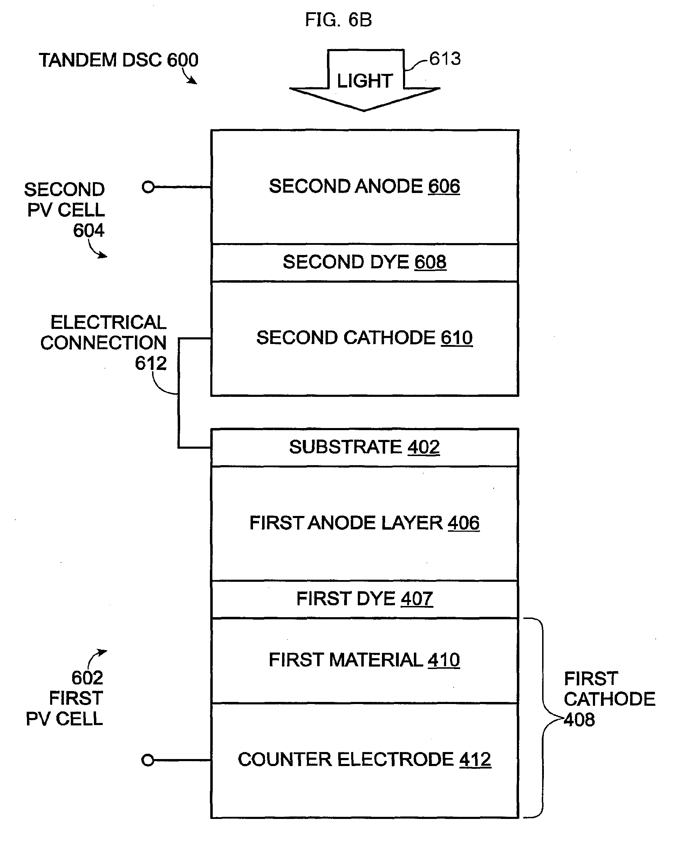

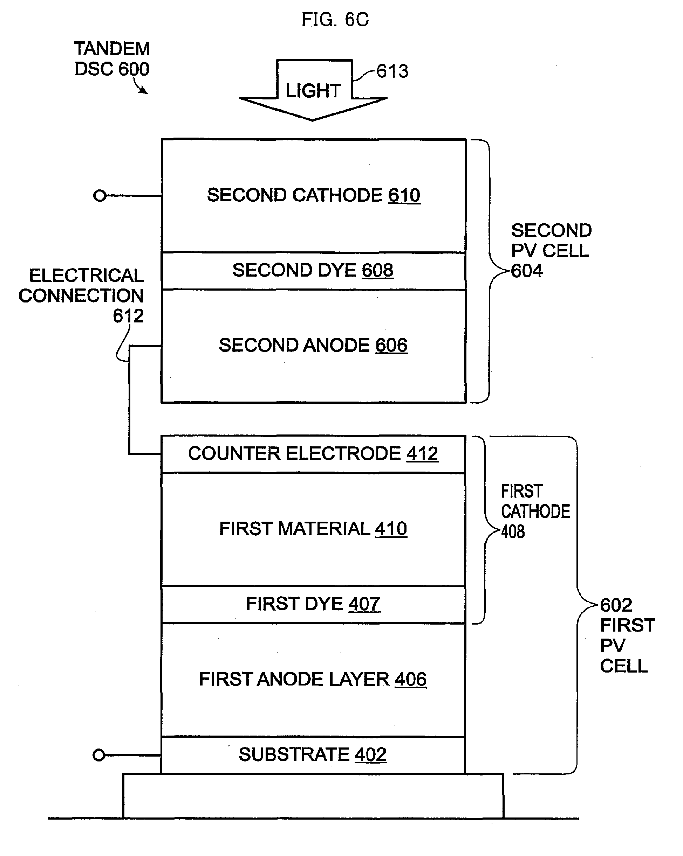

Fig. 6B depicts the first anode 406 of the first PV cells 602 connected in series with the second cathode 610 of the second PV cell 604. In this aspect, the tandem DSC 600 is configured so that the second anode 606 initially accepts incident light 613. Fig. 6C depicts the first cathode 408 of the first PV cell 602 connected in series with the second anode 606 of the second PV cell 604. In this aspect, the tandem DSC 600 is configured so that the second cathode 610 initially accepts incident light 613.

It should be understood that there are a number of ways of mechanically configuring the tandem DSC 600. The first and second PV cells 602/604 may be fabricated as a single module. Alternatively, the first and second PV cells 602/604 may be fabricated as separate modules, and connected together, mechanically and electrically, upon installation. In another aspect, the first and second PV cells 602/604 may be fabricated as separate modules and electrically connected at a DC-to-AC inverter.

Using $SnO_2$ coated $TiO_2$ nanostructures, it is possible to design a nanostructured electrode that exhibits the electrical properties of $SnO_2$, such as the conduction band Ec and electrical conductivity, while simultaneously exhibiting the physical properties of $TiO_2$ nanostructure, such as morphology, as well as bond and transfer characteristics. Experimental data is provided below, of coating a $SnO_2$ layer on a planar $TiO_2$ film for ease of characterization.

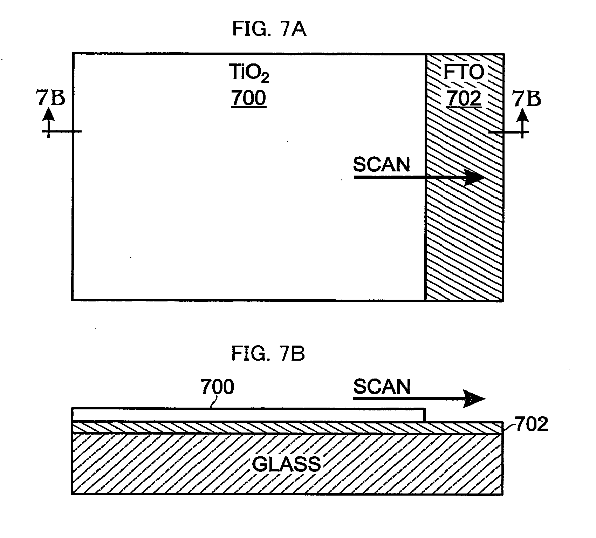

Figs. 7A and 7B respectively depict plan and partial cross-sectional views of a first step in the fabrication of $SnO_2$ coated $TiO_2$ nanostructures before measurement. Blanket $TiO_2$ 700 was sputtered onto fluorine-doped tin oxide (FTO) 702. A masked portion of FTO 702 was left uncoated.

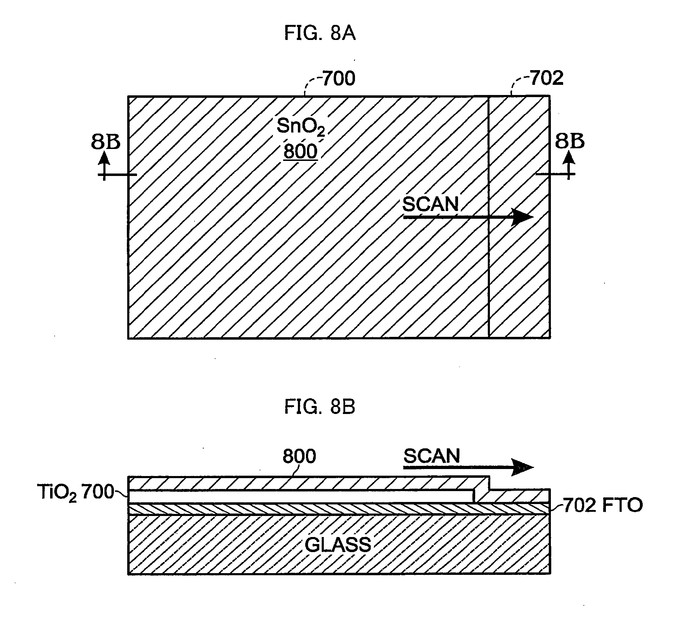

Figs. 8A and 8B respectively depict plan and partial cross-sectional views of a second step in the fabrication of $SnO_2$ coated $TiO_2$ nanostructures. The sample of Figs. 7A and 7B was soaked in Tin(IV) isopropoxide and annealed to form $SnO_2$ 800 prior to measurement.

As described by Diamant et al (Coordination Chemistry Reviews 248 (2004) 1271-1276), nanoporous $TiO_2$ can be coated with $SnO_2$ by dipping in a 50 mM Sn-isopropoxide solution, and then annealing at 500 °C for 30 minutes. For an initial experiment, 50 mM Tin(IV) isopropoxide in anhydrous isopropanol was prepared. Samples of sputtered/annealed $TiO_2$ film on FTO glass were soaked for 30 seconds, air-dried, and annealed at 500 °C for 30 minutes in ambient. The $SnO_2$ layer thickness is very thin due to short processing time (30 second), and it is difficult to accurately determine the correct thickness since the film is coated on a rough substrate (FTO glass). Kelvin probe measurements were used to determine the work function of the film before and after the $SnO_2$ coating procedure.

The Kelvin probe is a non-contact, vibrating capacitor instrument used to measure the work function difference between materials. The work function is indicative of surface condition and can reveal information regarding surface contamination, charging, oxidation, etc. The Kelvin probe utilizes a "calibration disk" consisting of a gold surface which is used to measure a "reference" work function $Au_{(ref)}$. From this reference, the following can be calculated:

$$\Phi_{(probe\ tip)} = Au_{(theoretical)} - Au_{(ref)}$$

$$\Phi_{(sample)} = \Phi_{(tip)} + \Phi_{(as\ measured\ on\ sample)}$$

where Au(theoretical) = 5.1 to 5.47eV

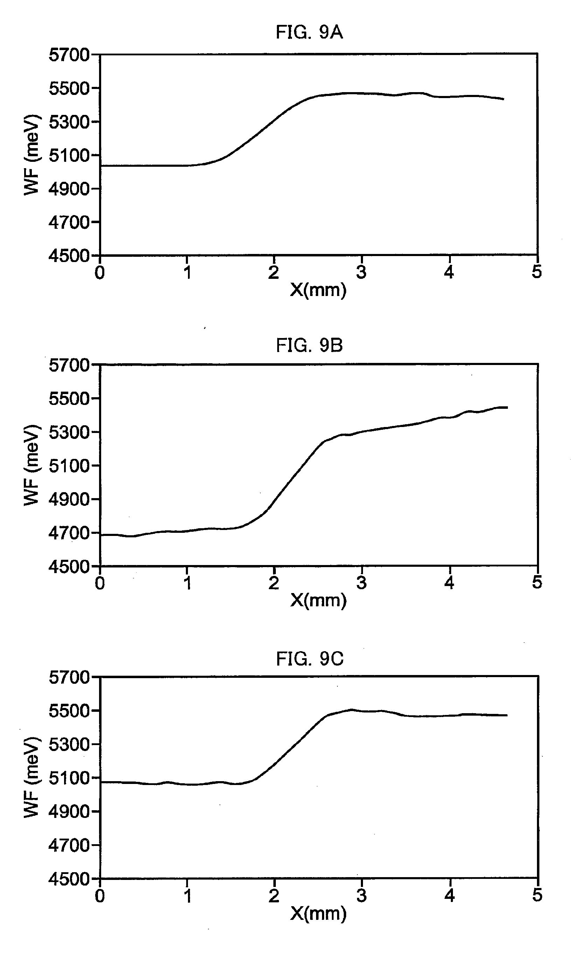

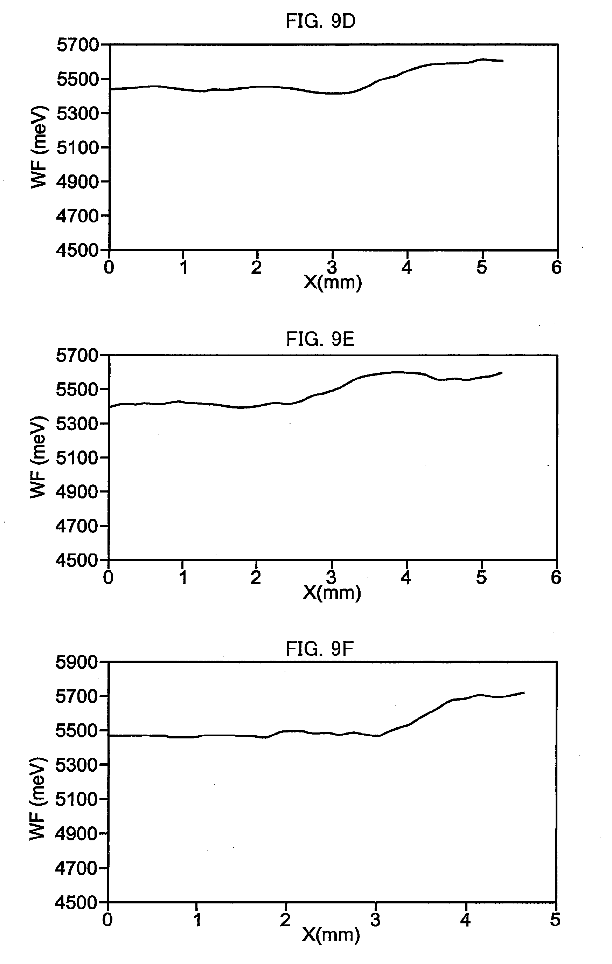

Figs. 9A through 9F are graphs of work functions measured on three separate $TiO_2$/FTO samples before (Figs. 9A-9C) and after (Figs. 9D-9F) $SnO_2$ coating treatment. The work function difference, measured using the Kelvin probe, decreased to ~200 meV (1 meV = 0.001 eV) for each sample. The work function difference between $TiO_2$ and FTO is measured to be between ~400 to 700 meV, which agrees well with the reported work function number. After coating with $SnO_2$, the work function difference is ~200 meV. Note that the potential value of the $SnO_2$/$TiO_2$/FTO surface (after coating) is similar to the value of the FTO surface (before coating). This observation is in accordance with expectation, as the work function of $SnO_2$ should be similar to FTO. Interestingly, the work function of $SnO_2$-coated FTO also increased slightly. This indicates that the coated $SnO_2$ film is so thin so that the surface potential is affected by the film under the $SnO_2$.

A tin oxide ($SnO_2$) coated titanium oxide ($TiO_2$) composite nanostructure has been provided along with a DSC device made from the $SnO_2$ coated $TiO_2$ nanostructures. Particular materials, device structures, and process details have been presented as examples to illustrate the invention. However, the invention is not limited to just these examples. Other variations and embodiments of the invention will occur to those skilled in the art.

According to one aspect of the invention, disclosed herein are titanium oxide ($TiO_2$) nanostructures covered with tin oxide ($SnO_2$), resulting in an ordered, one-dimensional nanostructure. As used herein, a set of "ordered" structures are formed in a uniform direction. Thus, "ordered one-dimensional" structures are line-like structures having a high aspect ratio of length to diameter, such as a wire, tube, or rod aligned in a uniform direction. That is, a set of one-dimensional structures have center axes aligned in parallel. The electrical properties, especially focusing on the conduction band, are controlled by the $SnO_2$. The $SnO_2$ covered $TiO_2$ nanostructures can be used for single junction dye-sensitized solar cells (DSCs) and tandem junction DSCs. In the case of tandem junction DSCs cell, the $SnO_2$ coated $TiO_2$ nanostructures can replace the $TiO_2$ nanostructure anode layer of some conventional devices.

Accordingly, a DSC is provided, made from a substrate having a top surface. An anode layer of $SnO_2$ coated $TiO_2$ nanostructures overlies the substrate top surface. A dye overlies the anode layer, and a cathode overlies the dye. The cathode may be made from a hole conducting layer having a solid state phase or a liquid phase redox electrolyte, with a counter electrode. The $TiO_2$ nanostructures may be $TiO_2$ nanoparticles, $TiO_2$ nanowires, or $TiO_2$ nanotubes. In the case of $TiO_2$ nanowires or $TiO_2$ nanotubes, their center axes are perpendicular to the substrate top surface. Regardless of the $TiO_2$ nanostructure morphology, the $SnO_2$ coating thickness is in the range of 2 to 10 nanometers (nm). In one aspect, the $SnO_2$ coated $TiO_2$ nanostructures have a dielectric layer shell, which may have a thickness in the range of 0.3 to 2 nm. The dielectric layer shell may be a material such as niobium oxide ($NbO_3$), aluminum oxide ($Al_2O_3$), magnesium oxide (MgO), silicon dioxide ($SiO_2$), or $TiO_2$, to name a few examples.

Additional details of the above-described DSC, a tandem DSC, and a composite nanostructure are provided below.

(OTHER DESCRIPTIONS)

In one aspect of the tandem DSC (600) of the invention, the electrical connection (612) between the first PV cell (602) and the second PV cell (604) is selected from a group consisting of a series connection and a parallel connection.

In one aspect of the tandem DSC (600) of the invention, the first dye (407) has a first bandgap; and, the second dye (608) has a second bandgap, larger than, or equal to the first bandgap.

In one aspect of the tandem DSC (600) of the invention, the first anode layer (406) $SnO_2$ coating (304) thickness (306) is in a range of 2 to 10 nanometers (nm).

In one aspect of the tandem DSC (600) of the invention, the first anode layer (406) $SnO_2$ coated $TiO_2$ nanostructures (300) have a dielectric layer shell (308).

In one aspect of the tandem DSC (600) of the invention, the dielectric layer shell (308) has a thickness (310) in a range of 0.3 to 2 nm.

In one aspect of the tandem DSC (600) of the invention, the dielectric layer shell (308) is a material selected from a group consisting of niobium oxide ($NbO_3$), aluminum oxide ($Al_2O_3$), magnesium oxide (MgO), silicon dioxide ($SiO_2$), and $TiO_2$.

In one aspect of the tandem DSC (600) of the invention, the first cathode (408) comprises: a first material (410), selected from a group consisting of a solid state phase hole conducting layer and a liquid phase redox electrolyte, overlying the first dye (407); and, a counter electrode (412) overlying the first material (410).

In one aspect of the composite nanostructure (300) of the invention, the dielectric layer shell (308) has a thickness (310) in a range of 0.3 to 2 nm.

In one aspect of the composite nanostructure (300) of the invention, the dielectric layer shell (308) is a material selected from a group consisting of niobium oxide ($NbO_3$), aluminum oxide ($Al_2O_3$), magnesium oxide (MgO), silicon dioxide ($SiO_2$), and $TiO_2$.

(RELATED APPLICATIONS)

This application is based on a Continuation-in-part (CIP) of a patent application entitled, TANDEM DYE-SENSITIZED SOLAR CELL AND METHOD FOR MAKING SAME, invented by Lee et al., Serial No. 12/892,779, filed September 28, 2010. This application is incorporated herein by reference.

## Claims

1. A dye-sensitized solar cell (DSC) (400) comprising:

   a substrate (402) having a top surface (404);
   an anode layer (406) comprising tin oxide ($SnO_2$) coated titanium oxide ($TiO_2$) nanostructures (300) overlying the substrate (402) top surface (404);
   a dye (407) overlying the anode layer (406); and,
   a cathode (408) overlying the dye (407).

2. The DSC (400) of claim 1 wherein the cathode (408) comprises:

   a first material (410), selected from a group consisting of a hole conducting layer having a solid state phase and a redox electrolyte having a liquid phase, overlying the dye (407); and,
   a counter electrode (412) overlying the first material (410).

3. The DSC (400) of claim 1 or 2 wherein the $TiO_2$ nanostructures (300) are selected from a group consisting of $TiO_2$ nanoparticles, $TiO_2$ nanowires, and $TiO_2$ nanotubes.

4. The DSC (400) of claim 1 or 2 wherein the $TiO_2$ nanostructures (300) are selected from a group consisting of $TiO_2$ nanowires and $TiO_2$ nanotubes, having a center axes (500) perpendicular to the substrate (402) top surface (404).

5. The DSC (400) of any one of claims 1 through 4 wherein the SnO$_2$ coating (304) thickness (306) on the TiO$_2$ nanostructures (300) is in a range of 2 to 10 nanometers (nm).

6. The DSC (400) of any one of claims 1 through 5 wherein the SnO$_2$ coated TiO$_2$ nanostructures (300) have a dielectric layer shell (308).

7. The DSC (400) of claim 6 wherein the dielectric layer shell (308) has a thickness (310) in a range of 0.3 to 2 nm.

8. The DSC (400) of claim 6 wherein the dielectric layer shell (308) is a material selected from a group consisting of niobium oxide (NbO$_3$), aluminum oxide (Al$_2$O$_3$), magnesium oxide (MgO), silicon dioxide (SiO$_2$), and TiO$_2$.

9. A tandem dye-sensitized solar cell (DSC) (600) comprising:

   a first photovoltaic (PV) cell (602) including:

   a first anode layer (406) of tin oxide (SnO$_2$) coated titanium oxide (TiO$_2$) nanostructures (300);
   a first dye (407) overlying the first anode layer (406);
   a first cathode (408) overlying the first dye (407);

   a second PV cell (604) including:

   a second anode layer (606) of TiO$_2$ nanostructures;
   a second dye (608) overlying the second anode (606);
   a second cathode (610) overlying the second dye (608);

   an electrical connection (612) between the first PV cell (602) and the second PV cell (604); and, wherein an electrode of the second PV cell (604), selected from a group consisting of the second anode (606) and second cathode (610), is configured to initially accept incident light (613).

10. The tandem DSC (600) of claim 9 wherein the electrical connection (612) between the first PV cell (602) and the second PV cell (604) is selected from a group consisting of a series connection and a parallel connection.

11. The tandem DSC (600) of claim 9 or 10 wherein the first dye (407) has a first bandgap; and, wherein the second dye (608) has a second bandgap, larger than, or equal to the first bandgap.

12. A composite nanostructure (300) comprising:

   a titanium oxide (TiO$_2$) nanostructure core (302); and,
   a tin oxide (SnO$_2$) coating (304) covering the core (302).

13. The composite nanostructure (300) of claim 12 wherein the SnO2 coating (304) thickness (306) is in a range of 2 to 10 nanometers (nm).

14. The composite nanostructure (300) of claim 12 or 13 further comprising:

   a dielectric layer shell (308) overlying the SnO$_2$ coating (304).

15. The composite nanostructure (300) of any one of claims 12 through 14 wherein the TiO$_2$ nanostructure core (302) is a morphology selected from a group consisting of TiO$_2$ nanoparticles, TiO$_2$ nanowires, and TiO$_2$ nanotubes.

## FIG. 1

*(PRIOR ART)*

FIG. 2

EP 2 843 674 A1

## FIG. 3A

300

SnO2 COATING
304

302

306

## FIG. 3B

TiO2
NANOSTRUCTURE
302

300

304

FIG. 3C

FIG. 3D

308 DIELECTRIC LAYER SHELL

## FIG. 4

COUNTER ELECTRODE 412

CATHODE 408

FIRST MATERIAL 410

407 DYE

404

ANODE LAYER 406

402

GLASS 416

LIGHT

## FIG. 5

CENTRAL AXIS 500

ANODE LAYER 406

SiO$_2$ COATED TiO$_2$ NANOSTRUCTURE 300

304

302

404

SUBSTRATE 402

FIG. 6A

TANDEM DSC 600

↓ LIGHT ← 613

SECOND
PV CELL
604

| SECOND CATHODE 610 |
| SECOND DYE 608 |
| SECOND ANODE 606 |

ELECTRICAL
CONNECTION
612

| SUBSTRATE 402 |
| FIRST ANODE LAYER 406 |
| FIRST DYE 407 |
| FIRST MATERIAL 410 |
| COUNTER ELECTRODE 412 |

602
FIRST
PV CELL

FIRST
CATHODE
408

FIG. 6B

TANDEM DSC 600

613

LIGHT

SECOND
PV CELL
604

SECOND ANODE 606

SECOND DYE 608

ELECTRICAL
CONNECTION
612

SECOND CATHODE 610

SUBSTRATE 402

FIRST ANODE LAYER 406

FIRST DYE 407

602
FIRST
PV CELL

FIRST MATERIAL 410

FIRST
CATHODE
408

COUNTER ELECTRODE 412

FIG. 6C

TANDEM
DSC 600

LIGHT 613

SECOND CATHODE 610

SECOND DYE 608

SECOND ANODE 606

SECOND
PV CELL
604

ELECTRICAL
CONNECTION
612

COUNTER ELECTRODE 412

FIRST MATERIAL 410

FIRST
CATHODE
408

FIRST DYE 407

FIRST ANODE LAYER 406

602
FIRST
PV
CELL

SUBSTRATE 402

FIG. 7A

TiO₂
700

FTO
702

7B

7B

SCAN

FIG. 7B

700

SCAN

702

GLASS

FIG. 8A

FIG. 8B

FIG. 9A

FIG. 9B

FIG. 9C

FIG. 9D

FIG. 9E

FIG. 9F

FIG. 10

SECOND DYE

FIRST DYE

Europäisches
Patentamt

European
Patent Office

Office européen
des brevets

# EUROPEAN SEARCH REPORT

Application Number

EP 14 00 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DIAMANT Y ET AL LEVASON BILL HECTOR ANDREW L: "Core-shell nanoporous electrode for dye sensitized solar cells: the effect of shell characteristics on the electronic properties of the electrode", COORDINATION CHEMISTRY REVIEWS, ELSEVIER SCIENCE, AMSTERDAM, NL, vol. 248, no. 13-14, 1 July 2004 (2004-07-01), pages 1271-1276, XP004578918, ISSN: 0010-8545, DOI: 10.1016/J.CCR.2004.03.003 | 1-3,5, 12-15 | INV. H01G9/20 H01L51/42 |
| Y | * 2.1 Electrode preparation; table 1 * | 4,6-11 | |
| Y | US 2012/073635 A1 (LEE JONG-JAN [US] ET AL) 29 March 2012 (2012-03-29) * the whole document * | 4,6-11, 14 | |
| Y | US 2007/062576 A1 (DUERR MICHAEL [DE] ET AL) 22 March 2007 (2007-03-22) * the whole document * | 9-11 | |
| Y | HUANG J ET AL: "Fabrication of ZnO/Al2O3 core-shell nanostructures and crystalline Al2O3 nanotube", APPLIED SURFACE SCIENCE, ELSEVIER, AMSTERDAM, NL, vol. 254, no. 18, 15 July 2008 (2008-07-15), pages 5917-5920, XP022695097, ISSN: 0169-4332, DOI: 10.1016/J.APSUSC.2008.03.150 [retrieved on 2008-04-01] * the whole document * | 6-8,14 | TECHNICAL FIELDS SEARCHED (IPC) H01G |
| Y | US 2012/199189 A1 (JIN SUNGHO [US] ET AL) 9 August 2012 (2012-08-09) * the whole document * | 4 | |

The present search report has been drawn up for all claims

| Place of search | Date of completion of the search | Examiner |
|---|---|---|
| The Hague | 7 January 2015 | Wolfbauer, Georg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 00 2948

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2015

| Patent document cited in search report | | Publication date | Patent family member(s) | | Publication date |
|---|---|---|---|---|---|
| US 2012073635 | A1 | 29-03-2012 | JP 2012074365 A | | 12-04-2012 |
| | | | US 2012073635 A1 | | 29-03-2012 |
| US 2007062576 | A1 | 22-03-2007 | AU 2004271247 A1 | | 17-03-2005 |
| | | | CN 1846288 A | | 11-10-2006 |
| | | | EP 1513171 A1 | | 09-03-2005 |
| | | | EP 1661151 A1 | | 31-05-2006 |
| | | | JP 2007511866 A | | 10-05-2007 |
| | | | US 2007062576 A1 | | 22-03-2007 |
| | | | WO 2005024866 A1 | | 17-03-2005 |
| US 2012199189 | A1 | 09-08-2012 | CN 102484152 A | | 30-05-2012 |
| | | | EP 2417637 A2 | | 15-02-2012 |
| | | | JP 2012523672 A | | 04-10-2012 |
| | | | KR 20120011871 A | | 08-02-2012 |
| | | | US 2012199189 A1 | | 09-08-2012 |
| | | | WO 2010118375 A2 | | 14-10-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 12892779 A, Lee

**Non-patent literature cited in the description**

• **B. O'REGAN ; M. GRATZEL.** A low cost high efficiency solar cell based on dye-sensitized colloidal Ti02 films. *Nature,* 24 October 1991, vol. 353, 737-740

• **M.K. NAZEERUDDIN et al.** *J. Am. Chem. Soc.,* 1993, vol. 115, 6382-6390

• **L. HAN et al.** High efficiency of dye-sensitized solar cell and module. *IEEE 4th World Conference on Photovoltaic Energy Conversion,* 1996, 179-182

• **DIAMANT et al.** *Coordination Chemistry Reviews,* 2004, vol. 248, 1271-1276